# EUROPÄISCHE PATENTSCHRIFT

(11) **EP 1 043 199 B1**
(45) Veröffentlichungstag und Bekanntmachung des Hinweises auf die Patenterteilung: **09.06.2004**
(21) Anmeldenummer: 00107132.3
(22) Anmeldetag: 07.04.2000
(51) Int. Cl.: B60R 21/20, B60Q 5/00, H01H 1/26

(54) **Lenkrad mit Airbagmodul und Hupkontakt**
Steering wheel with airbag module and horn contact
Volant avec module de coussin de sécurité et contact pour klaxon

(30) Priorität: 09.04.1999 DE 29906374 U
(43) Veröffentlichungstag der Anmeldung: 11.10.2000
(73) Patentinhaber: TRW Automotive Safety Systems GmbH, 63743 Aschaffenburg (DE)
(72) Erfinder: Fleckenstein, Jupp, 63856 Bessenbach (DE)
(74) Vertreter: Kitzhofer, Thomas, Dipl.-Ing.

(56) Entgegenhaltungen:
- DE-A- 19 801 514
- GB-A- 2 325 900
- US-A- 3 517 145
- US-A- 5 327 796

## Beschreibung

Die Erfindung betrifft ein Lenkrad mit Airbagmodul, insbesondere für Kraftfahrzeuge, wobei das Airbagmodul zur Betätigung eines Hupkontaktes etwa senkrecht zur Lenkradebene gegen Rückstellfedern um mindestens den Kontaktabstand verschiebbar ausgebildet und mit einem sich im wesentlichen parallel zur Lenkradebene erstreckendem Trägerblech verbunden ist, das elektrisch an das Fahrzeug angeschlossen ist, den Massekontakt bildet und mit einem gegenüber dem Fahrzeug elektrisch isoliert angeordneten Gegenkontakt zusammenwirkt, siehe z.B. die GB 2325900 A.

Bei mit Airbagmodulen ausgestatteten Lenkrädern wird das Airbagmodul fahrerseitig meist mit einer optisch und haptisch an die Einbauumgebung angepaßten Abdeckkappe ausgestattet, die gleichzeitig den Tastbereich für die Betätigung des Hupkontaktes bildet. Diese Abdeckkappe muß leicht aufreißbar und aufklappbar ausgebildet sein, damit der darunter zusammengefaltet angeordnete Gassack ungehindert austreten und sich entfalten kann, wenn er in Abhängigkeit von einer definierten Grenzverzögerung des Fahrzeuges explosionsartig aufgeblasen wird. Aus diesen Gründen muß die Abdeckkappe möglichst massearm ausgebildet werden. Daraus folgt weiter, daß sie nicht beliebig dick und steif konzipiert werden kann.

Soll zur Betätigung des Hupkontaktes nur die Abdeckkappe relativ zum Lenkrad bewegbar angeordnet werden, ergibt sich das Problem, daß die Abdeckkappe nicht unmittelbar auf dem darunterliegenden Gassack abgestützt werden kann, weil sonst die Hupbetätigung behindert würde. Andererseits besteht bei einer nur randseitig abgestützten Abdeckkappe die Gefahr, daß die vorgesehenen Aufreiß- und Biegebereiche mit der Zeit geschwächt werden und teilweise aufbrechen, so daß der Gassackraum nach außen nicht mehr abgedichtet ist.

Im Hinblick auf die vorgenannten Schwierigkeiten geht man daher meist so vor, daß nicht nur die Abdeckkappe, sondern das gesamte Airbagmodul relativ zum Lenkradkörper soweit beweglich angeordnet ist, daß der Hupkontakt betätigt und wieder gelöst werden kann. Bei derartigen Konzeptionen hat man üblicherweise einen der beiden Kontakte ortsfest im Lenkradkörper angeordnet und den anderen Kontakt am beweglichen Airbagmodul befestigt. Dabei ergibt sich jedoch die Schwierigkeit, daß man bei der Montage des Airbagmoduls im Lenkrad genau auf die Einhaltung des Kontaktabstandes achten muß, weil sonst entweder kein Hupkontakt zustande kommt oder aber das Hupsignal wegen eines zu geringen Kontaktabstandes durch Fahrzeugerschütterungen unbeabsichtigt ausgelöst wird. Die bekannte Konzeption erfordert daher nicht nur eine sorgfältige Montage, sondern auch die Einhaltung enger Fertigungstoleranzen bei der Herstellung und beim Zusammenbau aller beteiligten Bauteile, was zeit- und kostenaufwendig ist.

Der Erfindung liegt die Aufgabe zugrunde, für ein Lenkrad der eingangs genannten Art den Hupkontakt so auszubilden, daß der Fertigungsaufwand gesenkt werden kann, ohne daß die Betriebssicherheit beeinträchtigt wird.

Zur Lösung dieser Aufgabe ist erfindungsgemäß vorgesehen, daß der Gegenkontakt aus einem im wesentlichen parallel zur Lenkradebene ausgerichtetem Federblech oder dergleichen besteht, das über ein elektrisch isolierendes Element am Trägerblech befestigt ist und wenigstens einen etwa senkrecht zum Trägerblech elastisch auslenkbaren Kontaktarm aufweist, der rückseitig auf einem lenkradfesten, isolierten Widerlager abstützbar ist.

Der Grundgedanke besteht darin, beide Kontakte am gegenüber dem Lenkrad beweglich angeordneten Airbagmodul anzuordnen und im Lenkrad selbst lediglich ein elektrisch isoliertes Widerlager vorzusehen, auf dem sich ein elastisch auslenkbarer Kontaktarm rückseitig abstützen kann, so daß er bei Druck auf die Abdeckkappe und relativ Bewegung zwischen Airbagmodul und Lenkrad ausgelenkt und mit dem als Massekontakt ausgebildeten Trägerblech in elektrisch leitende Verbindung gebracht werden kann.

Auf diese Weise kann zwischen Trägerblech und Kontaktarm mit einfachen Mitteln ein sehr genauer Montageabstand eingehalten werden. Bis auf das im Lenkrad angeordnete Widerlager sind alle beteiligten Bauteile am Airbagmodul angeordnet, so daß der Montage-Kontaktabstand durch den Einbau des Airbagmoduls in das Lenkrad nicht beeinträchtigt wird. Es muß lediglich dafür gesorgt werden, daß das lenkradseitige Widerlager für den Kontaktarm relativ zur Montageebene für das Airbagmodul richtig positioniert ist. Da außerdem der Spielraum für die Bewegung des Airbagmoduls relativ zum Lenkradkörper stets deutlich größer sein muß als der Abstand für den Hupkontakt, kann man bezüglich der Anordnung der Widerlager relativ zur Montageebene für das Airbagmodul relativ große Toleranzen vorsehen, weil der Kontaktarm sich nicht unbedingt schon direkt auf dem Widerlager abstützen muß, solange keine Betätigung des Hupkontaktes gewünscht ist. Ein gewisser "Leerhub" bis zur Abstützung des Kontaktarmes auf dem Widerlager kann ohne weiteres in Kauf genommen werden, wobei lediglich die relativ Bewegung zwischen Airbagmodul und Lenkradkörper um den "Leerhub" größer ist als der einzuhaltende Mindest-Kontaktabstand.

Vorteilhafte Ausgestaltungen und Weiterbildung des Erfindungsgedankens sind in den Unteransprüchen 2 bis 12 beschrieben. Weitere Einzelheiten werden anhand der in den Figuren 1 bis 4 dargestellten Ausführungsbeispielen näher erläutert. Es zeigen:
Figur 1 einen vertikalen Teilschnitt durch ein Lenkrad mit den erfindungsrelevanten Bauteilen;
Figur 2 eine Draufsicht auf die Bauteile gemäß Figur 1;
Figur 3 eine Ausführungsform mit U-förmigem Trägerblech;
Figur 4 eine Ausführungsform mit zwei Trägerblechteilen gemäß Figur 2.

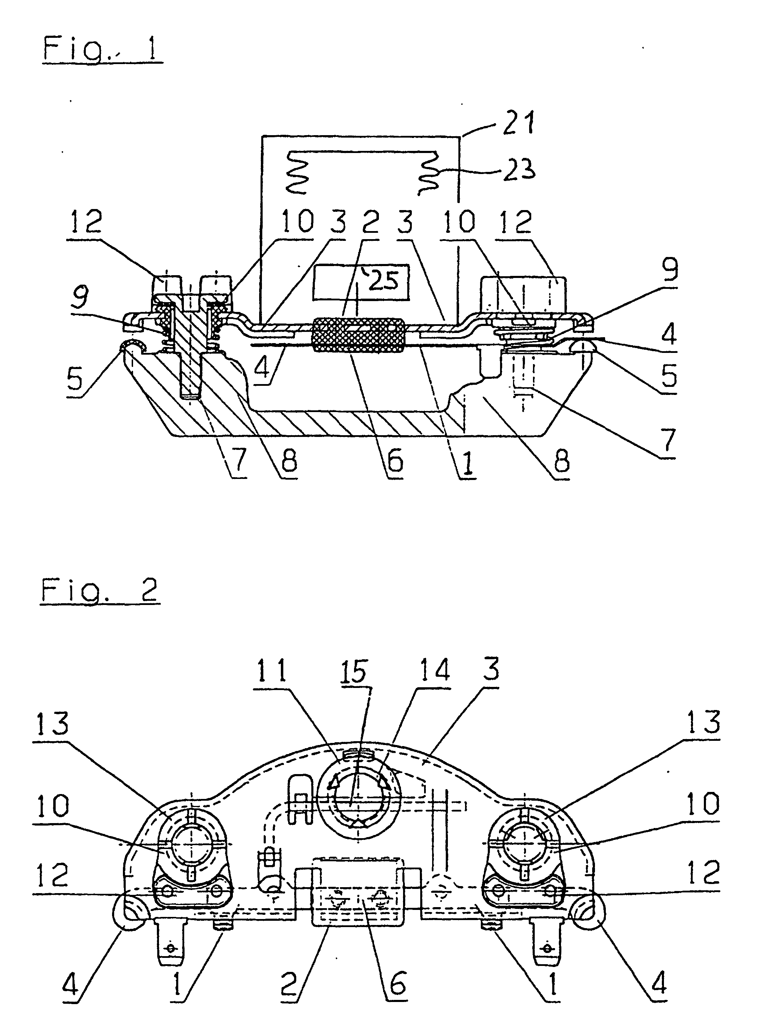

Bei dem Ausführungsbeispiel gemäß Figur 1 ist ein Trägerblech 3 über Schrauben 7 mit Schaft (vorzugsweise Paßschrauben) mit dem Skelett des Lenkrades derart verbunden, daß es bei von oben aufgebrachtem Druck gegen die Rückstellkraft der Feder 9 in Richtung auf das Lenkrad 8 hin bewegt werden kann. Insoweit entspricht die Darstellung der bekannten Anordnung eines Trägerblechs für die Befestigung eines Airbagmoduls 21 mit Gassack 23 und Gasgenerator 25, das zur Betätigung eines Hupkontaktes relativ zum Lenkrad beweglich angeordnet werden soll. Erfindungsgemäß ist auch der Gegenkontakt in Form eines Federbleches 1 mit dem Trägerblech 3 für das Airbagmodul verbunden und damit relativ zum Lenkrad 8 beweglich angeordnet. Das Federblech 1 ist somit - von der elektrischen Verbindung einmal abgesehen - nur modulseitig eingebunden, d.h. es besitzt lenkradseitig keine weitere Befestigungsstelle. Zur Befestigung des Federbleches 1 ist ein elektrisch isolierendes Element 2 vorgesehen, das vorzugsweise aus einem Kunststoff-Spritzteil besteht. Das Kunststoff-Spritzteil 2 umfaßt den Mittelteil 6 des Federblechs 1 und einen Randbereich des Trägerblechs 3, wobei zur Verbesserung der Haltbarkeit im Trägerblech 3 Bohrungen vorgesehen werden können, die vom Kunststoff-Spritzteil 2 ausgefüllt sind. Im dargestellten Ausführungsbeispiel ist das Federblech 1 mit zwei vom Mittelteil 6 ausgehenden, elastisch auslenkbaren Kontaktarmen 4 versehen, deren Ende rückseitig auf einem lenkradfesten, isolierten Widerlager 5 abstützbar sind. Wird das Trägerblech 3 gegen die Kraft der Rückstellfedern 9 nach unten gedrückt, so werden die Kontaktarme 4 aus der in Figur 1 dargestellten Lage elastisch nach oben ausgelenkt, bis sie das Ende des Trägerblechs 3 berühren und dadurch den gewollten elektrischen Kontakt herstellen, ohne daß man ein zusätzliches mechanisches Übertragungselement vorsehen muß. Wird der Betätigungsdruck auf das Trägerblech 3 aufgehoben, so wird das Trägerblech 3 durch die Rückstellfedern 9 wieder nach oben verlagert, so daß sich auch die elastisch auslenkbaren Kontaktarme in die dargestellte Ausgangsstellung zurück bewegen können. Für den Einsatz der Schaftschrauben 7 sind im Trägerblech 3 Bohrungen oder Ausnehmungen 13 (siehe Figur 2) vorgesehen, die mit einer Buchse 10 in Form eines Kunststoff-Spritzteils ausgekleidet sind. An die Buchsen 10 für die Schrauben 7 ist vorzugsweise seitlich versetzt je ein Widerlager oder Abstandshalter 12 für das Airbagmodul einstückig angeformt.

Aus Figur 2 sind die Bauteile der Schnittdarstellung von Figur 1 in der Draufsicht zu sehen. Im Trägerblech 3 ist der Randabschnitt für die Anordnung des elektrisch isolierenden Elements 2 zur Befestigung des Mittelteils 6 des Federbleches 1 seitlich ausgeschnitten, um zusätzlich zu den Bohrungen im Trägerblech 3 randseitige Verbindungen zwischen dem Oberteil und dem Unterteil des Kunststoff-Spritzteils 2 ausbilden zu können. Die Kontaktarme 4 erstrecken sich seitlich bis in den Randbereich des Trägerblechs 3. Es sind zwei Bohrungen 13 für den Einsatz der Schrauben 7 vorgesehen und mit einer Buchse 10 in Form eines Kunststoff-Spritzteils ausgekleidet. An die Buchsen 10 ist seitlich versetzt zu den Schrauben 7 je ein Widerlager oder Abstandshalter 12 für das Airbagmodul einstückig angeformt. Das Trägerblech 3 weist außerdem eine Bohrung 14 für die Befestigung des Airbagmoduls auf, die mit einer Buchse 11 in Form eines Kunststoff-Spritzteils ausgekleidet ist. In diesem Fall ist die Befestigung des Airbagmoduls am Trägerblech 3 als Snap-in-Verbindung ausgebildet, wozu am Trägerblech 3 eine parallel zur Lenkradebene wirkende Einrastfeder 15 befestigt ist.

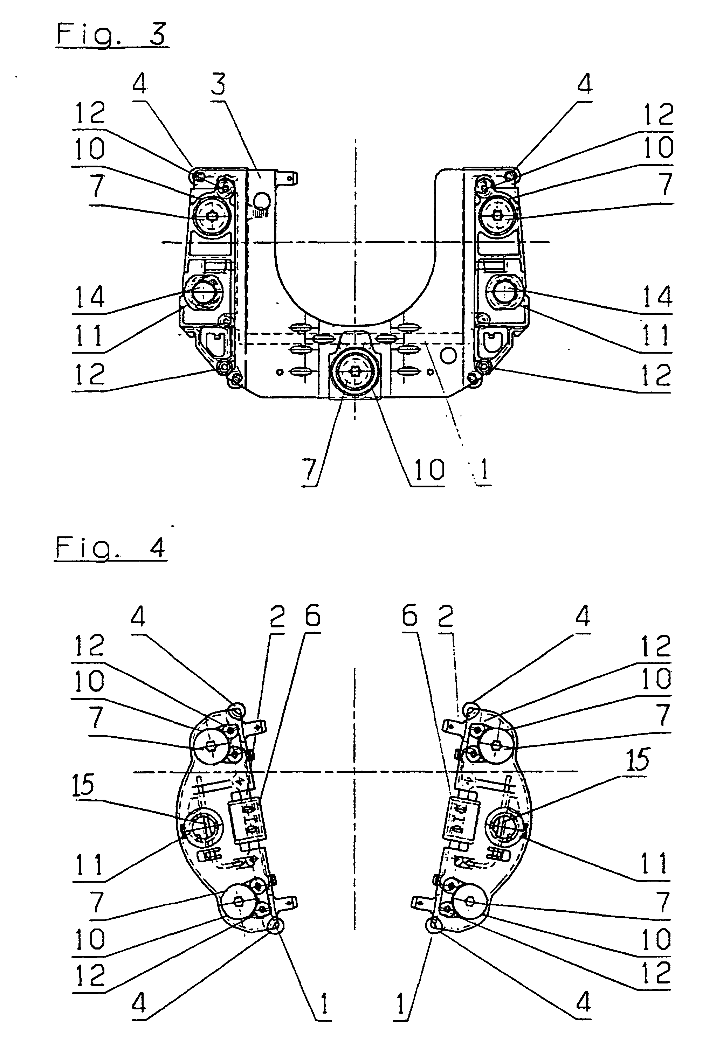

Aus Figur 4 ist ersichtlich, wie zwei Teile gemäß Figur 2 relativ zum Mittelpunkt des Lenkrades, der durch sich kreuzende Linien angedeutete ist, angeordnet werden können. Eine weitergehende Erläuterung ist nicht erforderlich.

Figur 3 zeigt die Ausbildung eines U-förmigen Trägerblechs 3, das über drei Schrauben 7 mit Schaft mit dem Lenkradkörper verbunden ist. In diesem Fall ist auch das Federblech 1 im wesentlichen U-förmig ausgebildet und mit insgesamt vier nach außen abgehenden Kontaktarmen 4 ausgestattet. Es sind zwei Befestigungspunkte 11, 14 für das Airbagmodul vorgesehen. Die Buchsen 10 für die Schrauben 7 und die einstückig angeformten Abstandshalter 12 sind wieder als Kunststoff-Spritzteil ausgebildet und ähnlich geformt wie in den Figuren 1, 2 und 4. Die Ausführungsform gemäß Figur 3 kommt mit drei Befestigungspunkten zwischen Trägerblech 3 und Lenkradkörpcr aus, belegt mit der Basis des U-förmigen Trägerblechs 3 aber einen gewissen Bauraum, der ggf. für andere Zwecke benötigt wird. Man muß dann auf die Ausführungsform mit zwei zueinander symmetrisch angeordneten Trägerblechen 3 und insgesamt vier Befestigungspunkten zurückgreifen.

Der Erfindungsgedanke ist selbstverständlich nicht auf die dargestellten Ausführungsformen beschränkt. Maßgebend ist lediglich, daß beide Kontakte am Trägerblech für das relativ zum Lenkrad beweglich angeordnete Airbagmodul ausgebildet bzw. befestigt sind, so daß die erforderliche exakte Einhaltung des Kontaktabstandes mit einfachen Mitteln an ein und dem selben Bauteil realisiert werden kann. Im Lenkrad selbst ist nur noch eine entsprechende Anzahl von Widerlagern vorzusehen, deren maßgebliche Anordnung relativ zur Montageebene für das Airbagmodul relativ großzügig toleriert werden kann, weil es insoweit nicht auf den Kontaktabstand, sondern auf den Bewegungsspielraum für die Betätigung des Hupkontaktes ankommt.

## Patentansprüche

1. Lenkrad mit Airbagmodul (21), insbesondere für Kraftfahrzeuge, wobei das Airbagmodul (21) zur Betätigung eines Hupkontaktes etwa senkrecht zur Lenkradebene gegen Rückstellfedern (9) um mindestens den Kontaktabstand verschiebbar ausgebildet und mit einem sich im wesentlichen parallel zur Lenkradebene erstreckenden Trägerblech (3) verbunden ist, das elektrisch an das Fahrzeug angeschlossen ist, den Massekontakt bildet und mit einem gegenüber dem Fahrzeug elektrisch isoliert angeordneten Gegenkontakt zusammenwirkt, **dadurch gekennzeichnet, daß** der Gegenkontakt aus einem im wesentlichen parallel zur Lenkradebene ausgerichteten Federblech (1) besteht, das über ein elektrisch isolierendes Element (2) am Trägerblech (3) befestigt ist und wenigstens einen etwa senkrecht zum Trägerblech (3) elastisch auslenkbaren Kontaktarm (4) aufweist, der rückseitig auf einem lenkradfesten, isolierten Widerlager (5) abstützbar ist.

2. Lenkrad nach Anspruch 1, **dadurch gekennzeichnet, daß** das Trägerblech (3) U-förmig ausgebildet ist und daß an den beiden Schenkeln des Trägerblechs (3) je ein Federblech (1) befestigt ist.

3. Lenkrad nach Anspruch 1, **dadurch gekennzeichnet, daß** das Trägerblech (3) aus zwei gleichen, im Lenkrad spiegelbildlich zueinander geordneten Teilen besteht, an denen je ein Federblech (1) befestigt ist.

4. Lenkrad nach Anspruch 2 oder 3, **dadurch gekennzeichnet, daß** das Federblech (1) streifenförmig mit einem Mittelteil (6) und zwei sich vom Mittelteil (6) aus in entgegengesetzte Richtungen erstreckenden Kontaktarmen (4) ausgebildet ist, wobei das Mittelteil (6) an den Schenkeln bzw. Teilen des Trägerblechs (3) befestigt ist und die Enden der Kontaktarme (4) auf lenkradfesten Widerlagern (5) abstützbar sind.

5. Lenkrad nach einem der Ansprüche 1 bis 4, **dadurch gekennzeichnet, daß** das elektrisch isolierende Element zur Befestigung des Federblechs (1) am Trägerblech (3) aus einem Kunststoff-Spritzteil (2) besteht.

6. Lenkrad nach einem der Ansprüche 1 bis 5, **dadurch gekennzeichnet, daß** das Trägerblech (3) über wenigstens zwei Schrauben (7) mit Schaft mit dem Lenkrad (8) verbunden ist und daß je Schraube (7) zwischen Trägerblech (3) und Lenkrad (8) eine Rückstellfeder (9) eingespannt ist.

7. Lenkrad nach Anspruch 6, **dadurch gekennzeichnet, daß** im Trägerblech (3) mit einer Buchse (10) in Form eines Kunststoff-Spritzteils ausgekleidete Bohrungen oder Ausnehmungen (13) für den Einsatz der Schrauben (7) vorgesehen sind.

8. Lenkrad nach Anspruch 7, **dadurch gekennzeichnet, daß** im Trägerblech (3) wenigstens zwei mit einer Buchse (11) in Form eines Kunststoff-Spritzteils ausgekleidete Bohrungen oder Ausnehmungen (14) für die Befestigung des Airbagmoduls vorgesehen sind.

9. Lenkrad nach Anspruch 8, **dadurch gekennzeichnet, daß** an die Buchsen (10) für die Schrauben (7) seitlich versetzt je ein Widerlager oder Abstandshalter (12) für das Airbagmodul einstückig angeformt ist.

10. Lenkrad nach Anspruch 9, **dadurch gekennzeichnet, daß** die Buchsen (11) für die Modulbefestigung auf der Oberseite als Widerlager für das Airbagmodul und auf der Unterseite als Abstandsbegrenzung zum Lenkrad (8) ausgebildet sind.

11. Lenkrad nach einem der Ansprüche 1 bis 10, **dadurch gekennzeichnet, daß** alle Kunststoff-Spritzteile (2, 10, 11, 12) in einem einzigen Spritzvorgang an den positionsgerecht in eine entsprechende Form eingelegten Trägerblech (3) und Federblech (1) angeformt sind.

12. Lenkrad nach einem der Ansprüche 1 bis 11, **dadurch gekennzeichnet, daß** die Befestigung des Airbagmoduls am Trägerblech (3) als Snap-in-Verbindung ausgebildet ist und daß dazu am Trägerblech (3) eine parallel zur Lenkradebene wirkende Einrastfeder (15) befestigt ist.

## Claims

1. A steering wheel with an airbag module (21), in particular for motor vehicles, the airbag module (21), for actuation of a horn contact, being constructed to be displaceable approximately perpendicularly to the steering wheel plane against restoring springs (9) by at least the contact gap, and being connected with a support plate (3) which extends substantially parallel to the steering wheel plane, is electrically connected to the vehicle, forms the earth contact and cooperates with a counter-contact arranged so as to be electrically insulated with respect to the vehicle, **characterized in that** the counter-contact consists of a spring plate (1) which is oriented substantially parallel to the steering wheel plane, is fastened to the support plate (3) by means of an electrically insulating element (2) and has at least one contact arm (4) which is able to be elastically deflected approximately perpendicularly to the support plate (3) and is able to be supported on the rear face on an insulated abutment (5) fixed to the steering wheel.

2. The steering wheel according to Claim 1, **characterized in that** the support plate (3) is constructed in a U-shape and that one spring plate (1) each is fastened to the two shanks of the support plate (3).

3. The steering wheel according to Claim 1, **characterized in that** the support plate (3) consists of two identical parts which are arranged in the steering wheel so as to be mirror-inverted to each other and to which one spring plate (1) each is fastened.

4. The steering wheel according to Claim 2 or 3, **characterized in that** the spring plate (1) is constructed in a strip shape with a central part (6) and with two contact arms (4) extending from the central part (6) in opposite directions, the central part (6) being fastened to the shanks or parts of the support plate (3) and the ends of the contact arms (4) being able to be supported on abutments (5) fixed to the steering wheel.

5. The steering wheel according to any of Claims 1 to 4, **characterized in that** the electrically insulating element for fastening the spring plate (1) to the support plate (3) consists of an injection-molded plastic part (2).

6. The steering wheel according to any of Claims 1 to 5, **characterized in that** the support plate (3) is connected with the steering wheel (8) by means of at least two shoulder studs (7) and that for each stud (7) a restoring spring (9) is clamped between the support plate (3) and the steering wheel (8).

7. The steering wheel according to Claim 6, **characterized in that** bores or recesses (13) lined with a bush (10) in the form of an injection-molded plastic part are provided in the support plate (3) for the insertion of the studs (7).

8. The steering wheel according to Claim 7, **characterized in that** at least two bores or recesses (14) lined with a bush (11) in the form of an injection-molded plastic part are provided in the support plate (3) for the fastening of the airbag module.

9. The steering wheel according to Claim 8, **characterized in that** one abutment or spacer (12) each for the airbag module is integrally molded with a lateral offset on the bushes (10) for the studs (7).

10. The steering wheel according to Claim 9, **characterized in that** the bushes (11) for fastening the module are constructed on the upper side as abutments for the airbag module and on the underside as means for limiting the distance to the steering wheel (8).

11. The steering wheel according to any of Claims 1 to 10, **characterized in that** all injection-molded plastic parts (2, 10, 11, 12) are molded in one single injection process on the support plate (3) and the spring plate (1) placed in the correct positions in a corresponding mold.

12. The steering wheel according to any of Claims 1 to 11, **characterized in that** the fastening of the airbag module to the support plate (3) is constructed as a snap-in connection and that for this, a latching spring (15), acting parallel to the steering wheel plane, is fastened to the support plate (3).

## Revendications

1. Volant de direction avec module d'airbag (21), en particulier pour véhicules automobiles, le module d'airbag (21), pour actionner un contact de klaxon, étant réalisé de manière à pouvoir être déplacé approximativement perpendiculairement au plan de volant de direction contre des ressorts de rappel (9), d'au moins l'espace de contact, et étant relié à une tôle support (3) s'étendant sensiblement parallèlement au plan du volant de direction et qui est connectée électriquement au véhicule, qui forme le contact à la terre et coopère avec un contact antagoniste agencé de manière isolée du point de vue électrique par rapport au véhicule, **caractérisé en ce que** le contact antagoniste est constitué par une tôle à ressort (1) orientée sensiblement parallèlement au plan du volant de direction, laquelle est fixée sur la tôle support (3) via un élément (2) électriquement isolant et présente au moins un bras de contact (4) qui peut être défléchi élastiquement approximativement par rapport à la tôle support (3), lequel peut prendre appui sur la face postérieure d'un contre-appui (5) isolé solidaire du volant de direction.

2. Volant de direction selon la revendication 1, **caractérisé en ce que** la tôle support (3) est réalisée en forme de U et **en ce qu'**une tôle à ressort (1) est fixée sur chacune des branches de la tôle support (3).

3. Volant de direction selon la revendication 1, **caractérisé en ce que** la tôle support (3) est constituée par deux parties identiques agencées de manière symétrique l'une par rapport à l'autre dans le volant de direction et sur chacune desquelles est fixée une tôle à ressort (1).

4. Volant selon la revendication 2 ou 3, **caractérisé en ce que** la tôle à ressort (1) est réalisée en forme de bande avec une partie médiane (6) et deux bras de contact (4) s'étendant depuis la partie médiane (6) dans des directions opposées, la partie médiane (6) étant fixée sur les branches ou sur les parties de la tôle support (3), et les extrémités des bras de contact (4) pouvant prendre appui sur des contre-appuis (5) solidaires du volant de direction.

5. Volant de direction selon l'une des revendications 1 à 4, **caractérisé en ce que** l'élément électriquement isolant pour fixer la tôle à ressort (1) sur la tôle support (3) est constituée par une pièce moulée par injection (2) en matière plastique.

6. Volant de direction selon l'une des revendications 1 à 5, **caractérisé en ce que** la tôle support (3) est reliée au volant de direction (8) par au moins deux boulons (7) à tige, et **en ce que** pour chaque boulon (7), un ressort de rappel (9) est serré entre la tôle support (3) et le volant de direction (8).

7. Volant de direction selon la revendication 6, **caractérisé en ce que** dans la tôle support (3), des perçages ou des évidements (13) revêtus d'une douille (10) ayant la forme d'une pièce moulée par injection en matière plastique, sont prévus pour l'insertion des boulons (7).

8. Volant de direction selon la revendication 7, **caractérisé en ce que** dans la tôle support (3), des perçages ou des évidements (13) revêtus d'une douille (11) ayant la forme d'une pièce moulée par injection en matière plastique, sont prévus pour la fixation du module d'airbag.

9. Volant de direction selon la revendication 8, **caractérisé en ce que** sur les douilles (10) pour les boulons (7), un contre-appui ou un espaceur (12) pour le module d'airbag est formé d'un seul tenant en décalage latéral.

10. Volant de direction selon la revendication 9, **caractérisé en ce que** les douilles (11) pour la fixation du module sont réalisées sur la face supérieure, sous forme de contre-appui pour le module d'airbag, et sur la surface inférieure, sous forme de limitation d'espacement par rapport au volant de direction (8).

11. Volant de direction selon l'une des revendications 1 à 10, **caractérisé en ce que** toutes les pièces moulées par injection (2, 10, 11, 12) sont formées au cours d'une seule opération d'injection sur la tôle support (3) et sur la tôle à ressort (1) insérées dans une position correcte dans un moule correspondant.

12. Volant de direction selon l'une des revendications 1 à 11, **caractérisé en ce que** la fixation du module d'airbag sur la tôle support (3) est réalisée sous forme de liaison par enclenchement et **en ce qu'**à cet effet, un ressort d'enclenchement (15) agissant parallèlement au plan du volant de direction est fixé sur la tôle support (3).
